# EUROPÄISCHE PATENTSCHRIFT

(11) **EP 0 603 987 B1**
(45) Veröffentlichungstag und Bekanntmachung des Hinweises auf die Patenterteilung: **20.03.2002**
(21) Anmeldenummer: 93250345.1
(22) Anmeldetag: 16.12.1993
(51) Int. Cl.: B01D 67/00

(54) **Permanente hydrophil-kationische Oberflächenschicht und Verfahren zu ihrer Herstellung**
Permanent hydrophylic-cationic surface layer and process for its manufacture
Couche superficielle à caractère hydrophile-cationique permanent et procédé pour sa fabrication

(30) Priorität: 23.12.1992 DE 4243996
(43) Veröffentlichungstag der Anmeldung: 29.06.1994
(73) Patentinhaber: Institut für Polymerforschung Dresden e.V., 01069 Dresden (DE)
(72) Erfinder: Buchhammer, Heide-Marie, Dr., D-01909 Grossharthau (DE); Petzold, Gudrun, D-01257 Dresden (DE); Lunkwitz, Klaus, Dr., D-01187 Dresden (DE)
(74) Vertreter: Rauschenbach, Marion, Dipl.-Ing.

(56) Entgegenhaltungen:
- EP-A- 0 050 864
- US-A- 4 849 106
- US-A- 4 927 540
- PATENT ABSTRACTS OF JAPAN vol. 14, no. 314 (C-0737)5. Juli 1990 & JP-A-02 107 649 (ASAHI GLASS CO LTD) 19. April 1990
- PATENT ABSTRACTS OF JAPAN vol. 4, no. 16 (C-0072)7. Februar 1980 & JP-A-54 153 872 (MITSUBISHI RAYON K. K.) 12. April 1979

## Beschreibung

Die Erfindung bezieht sich auf eine modifizierte Feststoffoberfläche mit einer permanenten hydrophil-kationischen Oberflächenschicht und auf ein Verfahren zu ihrer Herstellung.

Die für technische Einsatzgebiete genutzten Materialien sind häufig hydrophob. Beispielsweise besitzen Polyolefine, wie Polyethylen und Polypropylen, die in nahezu allen Bereichen der Technik Anwendung finden, viele hervorragende Eigenschaften, wie z. B. hohe chemische Beständigkeit, physiologische Unbedenklichkeit, niedrige Dichte, leichte Verarbeitbarkeit und einen niedrigen Preis.
Für das Gebiet der Membranfiltration verwendet man neben Polyolefinen vorzugsweise Polysulfon, Polyethersulfon und Polyvinylfluorid, die sich auch durch mechanische Stabilität und thermische Beständigkeit auszeichnen. Im medizinischen Bereich sind weitere hydrophobe Polymere, wie Silikongummi und Polyurethan, im Einsatz.
All diesen Materialien ist gemeinsam, daß sie nicht über hydrophile Gruppen verfügen, wodurch ihr Einsatz auf vielen Gebieten erheblich eingeschränkt ist. So ist zur Durchführung von Filtrationen im wäßrigen Medium eine sehr gute Benetzbarkeit nötig; bei Polymeren für die Medizin ist eine gute Biokompatibilität von Interesse. Deshalb gibt es eine Reihe von Möglichkeiten zur Hydrophilierung von Polymeren. Neben der Variante, eine Modifizierung des gesamten Materials durchzuführen, ist es auch möglich, durch Oberflächenmodifizierung am fertigen Polymergebilde die Eigenschaften in gewünschter Weise zu verändern.
Beispielsweise ermöglicht die Pfropfung geringer Mengen einer geeigneten hydrophilen Substanz Eigenschaftsveränderungen herbeizuführen. Zur Initiierung wird dabei vorzugsweise β- oder y-Strahlung angewendet (DD 271 457). Entscheidende Nachteile dieser Methode sind die relativ hohen Kosten, die Verfügbarkeit der apparativen Voraussetzungen und die allgemeinen Vorbehalte gegenüber der Strahlentechnologie.

Als weitere Methode zur Veränderung der Oberflächeneigenschaften wird die Adsorption geeigneter Substanzen genutzt. Beispielsweise werden durch Adsorption geeigneter Polymere verschiedene Oberflächen, wie z. B. Polysulfon, hydrophiliert (EP 0221 046).
In DE 3911697 werden hydrophobe Membranen aus Nylon und Polyvinylydenfluorid mit hydrophilen Polymeren, wie z. B. Polyacrylsäure, umgesetzt, was zu einer beträchtlichen Erhöhung der Durchflußleistung führt. Auch das Aufbringen von Tensiden zur Verbesserung der Benetzbarkeit ist bekannt.
Der generelle Nachteil dieser Methoden, die durch Anwendung von Hilfsmitteln eine Hydrophilierung erreichen, ist, daß die Hilfsmittel bei Filtrations-, Wasch- und Reinigungsprozessen ausgewaschen werden und daß somit außer einem Nachlassen der Wirksamkeit auch die unerwünschten Produkte ins Filtrat gelangen können.
Des weiteren ist in EP 43 67 20 ein Verfahren zur Hydrophilierung von Substraten mit Polyelektrolyten beschrieben. Dieses Verfahren ist jedoch auf solche Membranmaterialien beschränkt, auf denen durch ein vorgeschaltetes spezielles Hydrolyseverfahren die für die angestrebte Ausrüstung notwendigen Haftstellen erzeugt werden können.

Der Erfindung liegt die Aufgabe zugrunde, eine modifizierte Feststoffoberfläche mit einer permanenten hydrophil-kationischen Oberflächenschicht anzugeben, bei der die für die Hydrophilierung eingesetzten Hilfsstoffe besser an der Oberfläche haften, und ein vereinfachtes Verfahren zur Herstellung einer permanenten hydrophil-kationischen Oberflächenschicht anzugeben, bei dem die chemischen, thermischen und mechanischen Eigenschaften der Oberfläche nicht verschlechtert werden.

Die Aufgabe der Erfindung wird gemäß den Hauptansprüchen gelöst. Die abhängigen Ansprüche betreffen vorteilhafte Ausgestaltungen.

Die erfindungsgemäße modifizierte Feststoffoberfläche mit der permanenten hydrophil-kationischen Oberflächenschicht besteht aus einem hydrophil-kationischen Komplex, der durch das erfindungsgemäße Verfahren auf der Oberfläche gebildet wird.

Der hydrophil-kationische Komplex entsteht aus einem oder mehreren wasserlöslichen kationischen Polymeren und/oder kationaktiven Tensiden mit einem oder mehreren wasserlöslichen anionischen Polymeren und/oder anionenaktiven Tensiden, die sich alle in Lösung befinden. Dabei müssen die kationischen Stoffe im Überschuß zugegeben werden, so daß der entstandene Komplex ein Verhältnis der anionischen zu den kationischen Gruppen von < 1 aufweist.
Durch den Kontakt der kationischen und anionischen Stoffe bildet sich in der Lösung und auf der Oberfläche der erfindungsgernäße Komplex, der an der Oberfläche über adsorptive Kräfte haftet. Die elektrochemische Wechselwirkung zwischen der Oberfläche und den eingesetzten Stoffen führt zu einer vergleichsweise starken Haftung dieser aus dem Komplex bestehenden Schicht auf der Oberfläche.
Die kationischen und anionischen Stoffe werden gleichzeitig auf die zu modifizierende Oberfläche aufgebracht.

Bei dem erfindungsgemäßen Verfahren wird die Oberfläche in einer gemischten Lösung von Polykationen und/oder kationischen Tensiden und Polyanionen und/oder anionischen Tensiden behandelt. Dabei bildet sich unter direkter Beteiligung der Oberfläche ein nichtstöchiometrischer Komplex.

Die Art und Weise der Aufbringung der Schicht auf die Oberfläche ist von der zu beschichtenden Oberfläche, von den eingesetzten Stoffen und den Reaktionsbedingungen abhängig. Mögliche Verfahren sind z. B. das Tränken, das Einsaugen mittels Vakuum, das Aufsprühen usw. Besonders geeignet für die Erzeugung der erfindungsgemäßen Oberflächenschicht sind synthetische und natürliche funktionalisierte Makromoleküle.
Als kationische Makromoleküle werden Verbindungen bevorzugt eingesetzt, die ein stark basisches Ladungszentrum aufweisen, wie z. B. Polyallylamine, Polyethylenimine, Polyvinylpyridin, Polyvinylpyrrolidone, quaternisierte Polyacrylamide und ionogene Polymere, kationische Stärke, Chitosan, Galactornanane und Dodecylamidoethyl-dimethyl-benzylammoniumchlorid . Die anionischen Makromoleküle werden vorzugsweise in Form ihrer Alkalisalze eingesetzt, wie z. B. als Polyethylensulfonat, Polystyrensulfonat, Perfluoralkylsulfonat, Copolymer der Maleinsäure, Polyacrylat, Polymethacrylat, Carboxymethylcellulose und Peptide.

Weiterhin können ein oder mehrere nichtionische Netzmittel in jeder Verfahrensstufe zugegeben werden. Die verwendeten kationischen und anionischen Stoffe werden in einer Konzentration von vorzugsweise 0,01 bis 10% mit der Oberfläche vorzugsweise 30 s bis 10 min bei einer Temperatur von vorzugsweise 10 bis 60 °C in Kontakt gebracht.

An die erfindungsgemäßen Verfahrensschritte können sich noch weitere Verfahrensschritte, wie z. B. ein Fixierprozeß der Oberflächenschicht bei Temperaturen von 110 bis 160 °C anschließen. Als Oberflächen für die erfindungsgemäße Schicht eignen sich vorzugsweise polymere Oberflächen oder auch mikroporöse Oberflächen, wie z. B. Membranen usw.
Weiterhin ist besonders vorteilhaft, daß die erfindungsgemäße Schicht die mikroporöse Struktur einer Oberfläche, auf die sie aufgebracht wird, nicht verändert, d. h. die Abmessungen der Poren bleiben erhalten.
Ebenfalls vorteilhaft ist, daß die Schicht unlöslich in Wasser sowie in organischen Lösungsmitteln ist. Aus diesem Grund bleiben bei z. B. Filtrations-, Wasch- und Reinigungsprozessen keine Rückstände im Filtrat.
Ebenfalls Bestandteil des erfindungsgemäßen Verfahrens ist eine weitere Modifikation der komplexmodifizierten hydrophilen Oberflächenschicht in einer nachgestellten Reaktion. Bei diesem Verfahrensschritt, der durchgeführt werden kann, werden durch die Reaktion von ionischen Wirkstoffen mit den auf der modifizierten Oberflächenschicht vorhandenen funktionellen Gruppen neue Oberflächeneigenschaften, wie z.B. verbesserte Anfärbbarkeit, Biokompatibilität, antimikrobielle Wirksamkeit, Haftgleitverhalten, elektrische Leitfähigkeit, Beständigkeit gegenüber Medieneinflüssen und Nichtentflammbarkeit erreicht.

Die Erfindungen sollen an den folgenden Ausführungsbeispielen näher erläutert werden.

### Beispiel 1

Eine netzmittelfreie Polysulfonmembran (Porengröße 0,60 µm) wird wie folgt beschichtet. In 300 ml einer 2 x 10⁻² molaren Lösung von Dodecylamidoethyldimethylbencylammoniumclorid werden unter Rühren 100 ml einer 3 x 10⁻² molaren Polyacrylsäurelösung eingetropft. In der entstehenden Komplexdispersion wird die zu beschichtende Polysulfonmembran 3 min getränkt. Anschließend wird die überschüssige Menge durch Abtropfen des Lösungsgemisches auf einem Sieb entfernt, die Membran in kaltem Wasser gewaschen und an Luft getrocknet. Die so modifizierte Membran ist im Gegensatz zu einer unbehandelten Polysulfonmembran deutlich mit Wasser benetzbar. Ein aufgebrachter Wassertropfen wird sofort aufgesaugt, während er von der unbehandelten Membran abperlt. Der Wasserdurchfluß erhöht sich gegenüber einer unbehandelten Membran auf das 8fache.
In den Filtraten ist kein Polymer nachweisbar.

### Beispiel 2

Es wird eine Polyamidmembran entsprechend Beispiel 2 modifiziert, jedoch statt des kationenaktiven Tensids Dodecylamidoethyldimethylbencylammoniumchlorid eine Lösung von Polyethylenimin (1 x 10⁻² mol/l, pH auf 7 eingestellt), der 0,2 ml eines nichtionischen Tensids zugefügt wurden, verwendet. Die anfänglich hydrophobe Membran wird innerhalb von 2 s benetzt

## Patentansprüche

1. Modifizierte Feststoffoberfläche mit einer permanenten hydrophil-kationischen Oberflächenschicht, **dadurch gekennzeichnet, dass** die Oberflächenschicht aus einem hydrophil-kationischen Komplex besteht, der durch gleichzeitige Bildung und Aufbringung auf die Feststoffoberfläche aus einem oder mehreren wasserlöslichen kationischen Polymeren und/oder einem oder mehreren kationenaktiven Tensiden und einem oder mehreren wasserlöslichen anionischen Polymeren und/oder einem oder mehreren anionenaktiven Tensiden, und gegebenenfalls einem oder mehreren nichtionischen Netzmitteln erhältlich ist und bei dem das Verhältnis der anionischen zu den kationischen Gruppen < 1 ist und an den ein oder mehrere ionische Wirkstoffe gebunden sein können.

2. Verfahren zur Herstellung einer modifizierten Feststoffoberfläche nach Anspruch 1, **dadurch gekennzeichnet, dass** ein oder mehrere wasserlösliche kationische Polymere und/oder ein oder mehrere kationenaktive Tenside und ein oder mehrere wasserlösliche anionische Polymere und/oder ein oder mehrere anionenaktive Tenside sich in Lösung befinden und gegebenenfalls ein oder mehrere nichionische Netzmittel enthalten, und gleichzeitig auf eine Feststoffoberfläche aufgebracht werden, wobei die kationischen Stoffe im Überschuss vorhanden sind und einen Komplex bilden, bei dem das Verhältnis der anionischen zu den kationischen Gruppen < 1 ist und an den ein oder mehrere ionische Wirkstoffe gebunden sein können.

3. Verfahren nach Anspruch 2, **dadurch gekennzeichnet, dass** als nichtionische Netzmittel ungeladene und/oder amphiphile Tenside mit einer Kettenlänge von mindestens 6 Kohlenstoffatomen eingesetzt werden.

4. Verfahren nach Anspruch 2, **dadurch gekennzeichnet, dass** Lösungen der Stoffe mit einer Konzentration von 0,01 bis 10 % eingesetzt werden.

5. Verfahren nach Anspruch 2, **dadurch gekennzeichnet, dass** die Oberfläche mit der Lösung zwischen 30 s und 10 min in Berührung gebracht wird.

6. Verfahren nach Anspruch 2, **dadurch gekennzeichnet, dass** Lösungen mit einer Temperatur von 10 bis 60 °C eingesetzt werden.

7. Verfahren nach Anspruch 2, **dadurch gekennzeichnet, dass** wäßrige oder wäßrigalkoholische Lösungen eingesetzt werden.

8. Verfahren nach Anspruch 2, **dadurch gekennzeichnet, dass** die Lösungen der Stoffe auf eine Oberfläche aus Polymeren aufgebracht werden.

9. Verfahren nach Anspruch 2, **dadurch gekennzeichnet, dass** die Lösungen der Stoffe auf mikroporöse Oberflächen aufgebracht werden.

10. Verfahren nach Anspruch 2, **dadurch gekennzeichnet, dass** als ionische Wirkstoffe Farbstoffe, antimikrobielle Wirkstoffe oder flammhemmende Mittel eingesetzt werden.

## Claims

1. Modified solid state surface having a permanent hydrophil-cationic surface coating, **characterised in that** the surface coating consists of a hydrophil-cationic complex, which may be obtained by simultaneous formation and coating to the solid state surface, comprising one or several water-soluble cationic polymers and/or one or several cationactive tensides and one or several water-soluble anionic polymers and/or one or several anionactive tensides, and optionally one or several nonionic wetting agents and in which the ratio of anionic to cationic groups in the complex is < 1 and to which one or several ion active substances may be bounded with the complex.

2. Method of producing a modified solid state surface as claimed in claim 1, **characterised in that** one or several water-soluble cationic polymers and/or one or more cationactive tensides and one or more water-soluble anionic polymers and/or one or more anionactive tensides are placed in solution and optionally contain one or more nonionic wetting agents, being simultaneously coated to the solid state surface and wherein the cationic substances are present in excess and form a complex in which the ratio of anionic to cationic groups in the complex is < 1 and to which one or more ion active substances may be bounded with the complex.

3. Method as claimed in claim 2, **characterised in that** uncharged and/or amphiphilic tensides with a chain length of at least 6 carbon atoms are used as the nonionic wetting agent.

4. Method as claimed in claim 2, **characterised in that** the substances are used in solutions of a concentration of 0,01 to 10 %.

5. Method as claimed in claim 2, **characterised in that** the surface is brought into contact with the solution for between 30 seconds and 10 minutes.

6. Method as claimed in claim 2, **characterised in that** solutions with a temperature of 10 to 60 °C are used.

7. Method as claimed in claim 2, **characterised in that** solutions are water-soluble or soluble in water-alkohol mixtures.

8. Method as claimed in claim 2, **characterised in that** the solutions of substances are applied to a surface of polymers.

9. Method as claimed in claim 2, **characterised in that** solutions of substances are applied to microporous surfaces.

10. Method as claimed in claim 2, **characterised in that** dyes, antimicrobiael active substances or flame-retardants are used as ion active substances.

## Revendications

1. Surfaces de matière solide modifiées ayant une couche superficielle permanente cationique d'une manière hydrophile,
**caractérisées en ce que**
la couche superficielle est formée d'un complexe cationique d'une manière hydrophile, qui par formation et application simultanée sur la surface de la matière solide, est accessible à partir d'un ou plusieurs polymères cationiques solubles dans l'eau et/ou à partir d'un ou plusieurs agents tensioactifs, actifs par le cation, et d'un ou plusieurs polymères anioniques solubles dans l'eau et/ou d'un ou plusieurs agents tensioactifs actifs par l'anion et éventuellement d'un ou plusieurs agents mouillants non ioniques, complexe dont le rapport des groupes anioniques aux groupes cationiques est <1 et auquel peuvent être liés un ou plusieurs principes actifs ioniques.

2. Procédé de production d'une surface de matière solide modifiée selon la revendication 1,
**caractérisé en ce qu'**
un ou plusieurs polymères cationiques solubles dans l'eau et/ou un ou plusieurs agents tensioactifs, actifs par le cation et un ou plusieurs polymères anioniques solubles dans l'eau, et/ou un ou plusieurs agents tensioactifs actifs par l'anion se trouvent en solution et renferment éventuellement un ou plusieurs agents mouillants non ioniques et en même temps sont appliqués sur une surface de matière solide, les substances cationiques étant présentes en excès et formant un complexe dans lequel le rapport des groupes anioniques aux groupes cationiques est <1 et auquel un ou plusieurs principes actifs ioniques peuvent être liés.

3. Procédé selon la revendication 2,
**caractérisé en ce que**
comme agent mouillant non ionique on met en oeuvre des agents tensioactifs non chargés et/ou amphiphiles ayant une longueur de chaîne d'au moins 6 atomes de carbone.

4. Procédé selon la revendication 2,
**caractérisé en ce qu'**
on met en oeuvre des solutions de substances ayant une concentration de 0,01 à 10 %.

5. Procédé selon la revendication 2,
**caractérisé en ce qu'**
on met en contact les surfaces avec la solution pendant entre 30 s. et 10 min.

6. Procédé selon la revendication 2,
**caractérisé en ce qu'**
on met en oeuvre des solutions ayant une température allant de 10 à 60°C.

7. Procédé selon la revendication 2,
**caractérisé en ce qu'**
on met en oeuvre des solutions aqueuses ou hydroalcooliques.

8. Procédé selon la revendication 2,
**caractérisé en ce qu'**
on applique les solutions des substances sur une surface en polymères.

9. Procédé selon la revendication 2,
**caractérisé en ce qu'**
on applique les solutions de substance sur des surfaces microporeuses.

10. Procédé selon la revendication 2,
**caractérisé en ce qu'**
on met en oeuvre comme principes actifs ioniques, des colorants, des principes actifs antimicrobiens, ou des agents ignifuges.
